# FASCICULE DE BREVET EUROPEEN

(11) **EP 1 452 793 B1**
(45) Date de publication et mention de la délivrance du brevet: **23.11.2011**
(21) Numéro de dépôt: 04002777.3
(22) Date de dépôt: 09.02.2004
(51) Int. Cl.: F16M 13/00, B60H 1/00, H02K 5/24, F04D 29/60, B29C 41/00

(54) **Pièce de support d'équipement comportant des nervures de support et son procédé de moulage**
Ausrüstungshalterung und ihr Formverfahren
Equipment support with supporting ribs and its molding method

(30) Priorité: 28.02.2003 FR 0302484
(43) Date de publication de la demande: 01.09.2004
(73) Titulaire: VALEO SYSTEMES THERMIQUES, 78321 Le Mesnil Saint Denis Cedex (FR)
(72) Inventeur: Talaucher, Stéphane, 78830 Bonnelles (FR); Terranova, Gilbert, 78610 Le Perray en Yvelines (FR)

(56) Documents cités:
- FR-A- 2 781 724
- GB-A- 817 961
- US-A- 5 624 694
- US-B1- 6 359 363

## Description

L'invention concerne une pièce de support pour le maintien d'un équipement, notamment d'un équipement de véhicule automobile, comprenant un boîtier en matière plastique moulée ayant une paroi périphérique sur laquelle sont prévues des nervures de support pour le maintien de l'équipement, la paroi périphérique définissant un logement d'axe donné pour la réception de l'équipement.

Par ailleurs, l'invention concerne un procédé de moulage d'une pièce de. support comportant des nervures de support pour le maintien d'un équipement, notamment d'un équipement de véhicule automobile, comprenant les étapes consistant à :
- prévoir un moule constitué d'au moins deux noyaux ;
- rapprocher les deux noyaux selon une direction donnée, de telle sorte qu'ils soient en contact l'un avec l'autre selon un plan de joint ;
- remplir le moule d'une matière moulable ; et
- écarter les noyaux selon la direction donnée.

L'invention se rapporte plus particulièrement aux pièces de support fabriquées dans l'industrie, par exemple les pièces de support d'équipements de véhicule automobile, tels que les moteurs électriques entraînant une turbine et destinés à un appareil de chauffage-ventilation et/ou de climatisation de véhicule automobile ou encore à un groupe moto-ventilateur disposé derrière un radiateur de refroidissement du moteur du véhicule automobile Ces pièces sont fréquemment constituées par un boîtier cylindrique en matière plastique moulée comportant intérieurement une série de nervures de support pour le maintien de l'équipement, par exemple le moteur électrique.

Une pièce de support de ce type est connue de FR 2781724.

Pour que l'équipement soit maintenu fermement, il est nécessaire que le diamètre intérieur défini par les extrémités des nervures soit supérieur au diamètre extérieur de l'équipement supporté. Il est en outre nécessaire qu'il existe un serrage ou jeu négatif entre le diamètre extérieur de l'équipement et les nervures.

Etant donné que les pièces de support sont obtenues par moulage, il est nécessaire de prévoir un angle de dépouille du moule pour permettre le retrait de la pièce hors du moule. Cette dépouille se retrouve sur les nervures qui présentent par conséquent une variation de diamètre d'une extrémité à l'autre. Cette variation de diamètre dépend, d'une part, de l'angle de dépouille et, d'autre part, de la longueur de la pièce. Plus l'angle de dépouille est important et plus la pièce est longue, plus la variation de diamètre est importante.

Pour que l'équipement soit correctement maintenu à chacune de ses deux extrémités, il est par conséquent nécessaire qu'il existe un serrage à l'extrémité la plus évasée des nervures. Il est donc nécessaire, comme on l'a dit précédemment, que le diamètre extérieur de l'équipement à supporter, par exemple le moteur électrique, soit supérieur au diamètre défini par les extrémités des nervures à l'extrémité où ces nervures ont le diamètre le plus important. Il va de soi qu'à l'autre extrémité, c'est à dire à l'extrémité où le diamètre des nervures est le plus resserré, le serrage est plus important encore.

Cette variation de serrage présente plusieurs inconvénients. Tout d'abord, l'équipement n'est pas maintenu de manière homogène sur toute sa longueur. L'équipement est mieux maintenu à une extrémité qu'à l'autre. En outre, dans une partie d'extrémité de la pièce de support, on a une première tolérance de fabrication, alors que dans une autre partie d'extrémité, on a une deuxième tolérance de fabrication qui est décalée par rapport à la première. Il en découle une tolérance générale qui est la somme des deux tolérances précitées et qui est donc beaucoup trop large, entraînant parfois une impossibilité de montage de l'équipement dans la pièce de support.

C'est la raison pour laquelle on a cherché à réduire le plus possible la différence de diamètre entre les deux extrémités des nervures des pièces de support actuellement connues. Dans l'art antérieur, ce résultat est atteint actuellement par la réduction de l'angle de dépouille. Toutefois, il n'est pas possible en pratique de descendre en dessous d'un angle de dépouille inférieur à 1°. A titre d'exemple, un angle de dépouille pour une longueur de 55 mm représente une variation de 0,96 mm du rayon de la nervure.

Par ailleurs, il est connu de placer le plan de joint des deux noyaux au milieu de la pièce de manière à diviser par deux l'influence de la longueur des nervures. Cette méthode permet de diminuer les variations du diamètre des nervures d'un facteur égal à deux. Les inconvénients mentionnés précédemment sont atténués mais subsistent toutefois.

L'invention vise à éliminer ces inconvénients en réalisant une pièce de support comportant des nervures sans dépouille.

Elle concerne par ailleurs un procédé de moulage de la pièce de support, ainsi qu'un moule pour la mise en oeuvre de ce procédé.

L'invention propose à cet effet une pièce de support pour le maintien d'un équipement, notamment d'un équipement de véhicule automobile, du type défini plus haut, dans laquelle les nervures sont inclinées par rapport à l'axe du logement de réception.

Grâce à ces caractéristiques, les nervures présentent un angle de dépouille nul. Le diamètre du cercle défini par les extrémités des nervures est constant d'une extrémité à l'autre de la pièce moulée. Le serrage de l'équipement supporté est constant sur toute sa longueur, l'équipement est donc mieux maintenu. De plus, il n'est pas nécessaire d'augmenter le serrage à une extrémité pour que l'équipement soit maintenue à l'autre extrémité. Les tolérances de fabrication sont donc plus fiables, sans dispersion possible. Les vibrations de l'équipement, lorsqu'il s'agit d'un moteur, sont ainsi mieux supportées et ne provoquent pas de désaccouplement de l'équipement par rapport à son support.

Il est à noter que la paroi périphérique de la pièce de support sur laquelle les nervures sont prévues, comporte une dépouille non nulle. Toutefois, ceci ne présente aucun inconvénient parce que l'équipement supporté n'est pas en contact avec elle.

Selon une autre caractéristique de l'invention, les nervures sont formées à l'intérieur du boîtier et elles ont chacune une arête propre à former contact avec l'équipement.

Avantageusement, les nervures sont groupées par paires comportant des inclinaisons opposées. Cette caractéristique facilite le démoulage des noyaux. Le nombre des nervures est avantageusement compris entre 4 et 12.

Dans une réalisation particulière, les nervures présentent une forme en hélice. Leur dépouille est alors strictement égale à zéro. Dans une autre réalisation particulière, les nervures présentent la forme d'un segment de droite reliant deux points situés sur une hélice. La dépouille n'est pas alors strictement nulle, mais elle est négligeable. L'angle d'inclinaison de l'hélice est de préférence comprise entre 1° et 15°.

La forme de la nervure correspond avant tout à la forme d'une arête que présente la nervure. En effet c'est cette arête qui vient en contact avec l'équipement que loge la pièce de support.
Les nervures peuvent présenter une section choisie dans le groupe comprenant les formes triangulaires, carrées, rectangulaires, semi-circulaires, elliptiques ou une combinaison de ces formes.

La section des nervures peut être constante, croissante ou décroissante. Il est également possible de combiner ces diverses possibilités.

Dans un mode de réalisation particulier, les nervures sont continues.

Dans un autre mode de réalisation particulier, les nervures sont formées d'une succession de bossages disposés selon une ligne inclinée par rapport à l'axe du logement.

Dans ce cas, les bossages peuvent être disposés selon une ligne hélicoïdale ou encore selon un segment de droite reliant deux points situés sur une hélice. Dans tous les cas, il est avantageux que les bossages aient des points de contact définissant des arêtes des nervures.

L'invention concerne aussi un procédé de moulage d'une pièce de support telle que définie plus haut, dans lequel les nervures de support sont prévues sur la pièce moulée avec une inclinaison par rapport à la direction donnée, dans lequel les noyaux sont conformés de telle manière que leur plan de joint suive les nervures, et dans lequel un dégagement est prévu dans au moins un des noyaux au niveau de leur plan de joint afin de former les nervures, lors du moulage, par un remplissage de ce dégagement par la matière moulée.

Avantageusement, les noyaux sont conformés de telle manière que leur plan de joint forme des arêtes des nervures.

Pour la mise en oeuvre du procédé, on utilise avantageusement un noyau supérieur comportant une partie centrale cylindrique et des protubérances périphériques et un noyau inférieur comportant une partie centrale cylindrique et des protubérances périphériques.

Chaque protubérance périphérique du noyau supérieur comporte une face cylindrique extérieure, une face cylindrique intérieure et des faces radiales reliant la face cylindrique extérieure et la face cylindrique extérieure, tandis que chaque protubérance périphérique du noyau inférieur comporte une face cylindrique extérieure, une face cylindrique intérieure et des faces radiales reliant les faces cylindriques extérieures et intérieures.

Les faces radiales peuvent être notamment planes ou hélicoïdales.

De manière avantageuse, le moule comprend un dégagement dans au moins un des noyaux au niveau de leur plan de joint pour former les nervures lors du moulage,

Ce dégagement est formé de préférence par une face de raccordement reliant une face cylindrique extérieure et une face radiale du noyau supérieur et/ou par une face de raccordement reliant une face cylindrique extérieure et une face radiale du noyau inférieur.

D'autres caractéristiques et avantages de l'invention apparaîtront encore à la lecture de la description qui suit d'exemples de réalisation donnés à titre illustratif en référence aux dessins annexés, sur lesquels :
la figure 1 est une vue en perspective d'une pièce de support d'un équipement, dans l'exemple d'un moteur électrique, réalisée selon l'invention ;
la figure 2 est une vue de dessus de la pièce de support représentée sur la figure 1 ;
la figure 3 est une vue en coupe selon la ligne III-III de la pièce de support de la figure 1 ;
la figure 4 est un schéma tri-dimensionnel qui illustre l'inclinaison des nervures de support, par rapport à l'axe de rotation, d'une pièce de support réalisée conformément à l'invention ;
la figure 5 est un schéma tri-dimensionnel qui représente une paire de nervures associées ;
les figures 6 et 7 sont des vues en perspective qui représentent deux positions des noyaux utilisés dans le procédé de l'invention ;
la figure 8 est une vue de dessus des noyaux représentés sur les figures 6 et 7 ;
la figure 9 est un détail agrandi de la figure 8 ;
la figure 10 est une vue partielle en perspective d'un autre mode de réalisation d'une pièce de support moulée conforme à l'invention ; et
la figure 11 est une vue partielle en coupe d'une pièce de support dont une nervure est en contact avec un équipement logé dans la pièce de support.

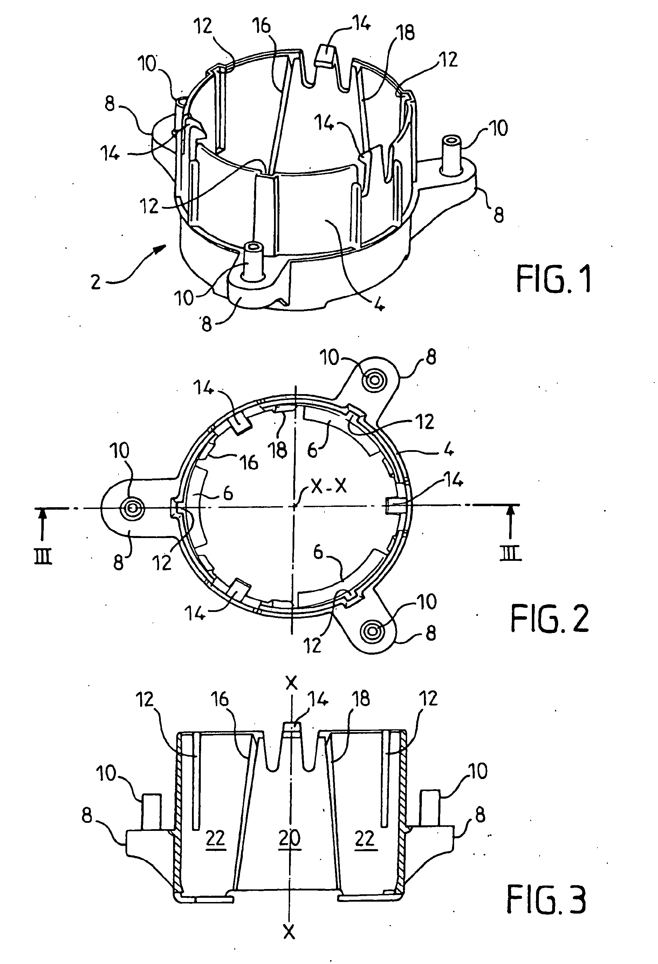

On a représenté sur la figure 1 une vue en perspective d'un boîtier de support 2 de moteur électrique. Le boîtier 2 est une pièce moulée obtenue par moulage-d'une matière plastique, par exemple un polypropylène, un polypropylène chargé de talc, un polyuréthanne, ou un polyoxyméthylène. La pièce de support 2 comporte une paroi périphérique 4 (encore appelée jupe) d'axe X-X (voir figures 2 et 3) qui délimite un logement ouvert propre à recevoir un moteur électrique (non représenté). Dans l'exemple, trois rebords 6 disposés respectivement à 120° l'un de l'autre (figure 2) permettent de retenir le moteur électrique dans le logement. Cependant le nombre des rebords n'est pas limité à cette valeur et pourrait être supérieur à trois. Extérieurement, la paroi périphérique 4 comporte trois pattes 8 disposées à 120° l'une de l'autre et un godron 10 sur chacune de ces pattes. Ceci permet de fixer le boîtier 2 sur le châssis d'un véhicule automobile.

Ce moteur électrique est, par exemple, un moteur destiné au groupe moto-ventilateur qui équipe une installation de chauffage-ventilation/climatisation de véhicule automobile.

Trois rainures de support 12 ménagées à 120° l'une de l'autre dans la paroi périphérique 4 permettent de découpler le support par rapport au reste de l'installation. Trois clips 14 disposés entre les rainures 12 retiennent le moteur électrique après sa mise en place. Des nervures 16 et 18 sont formées intérieurement sur la paroi périphérique 4. Comme on peut le voir sur la figure 2, qui est une vue de dessus de la pièce de support représentée sur la figure 1, ces nervures sont ici au nombre de six, à savoir trois nervures 16 et trois nervures 18. De manière générale, on peut avoir de deux paires à six paires de nervures, soit de quatre à douze nervures. Les nervures 16 s'inscrivent sur une hélice orientée à droite, tandis que les nervures 18 s'inscrivent sur une hélice orientée à gauche. Les inclinaisons des nervures 16 et 18 par rapport à l'axe de symétrie en rotation X-X du boîtier 2 sont donc opposées. En conséquence, les nervures sont groupées par paires (une nervure 16 et une nervure 18) d'inclinaisons opposées.

On délimite ainsi entre deux nervures 16 et 18 une zone 20 en forme de trapèze isocèle qui va en s'élargissant vers le bas (selon la figure 3). De la même manière, on délimite sur la paroi périphérique 4, entre les nervures 16 et 18 de deux paires de nervures voisines, des zones 22 en forme de trapèze isocèle qui vont en s'élargissant vers le haut. Ces zones 20 et 22 en forme de trapèze ont un angle de dépouille pour permettre leur démoulage.

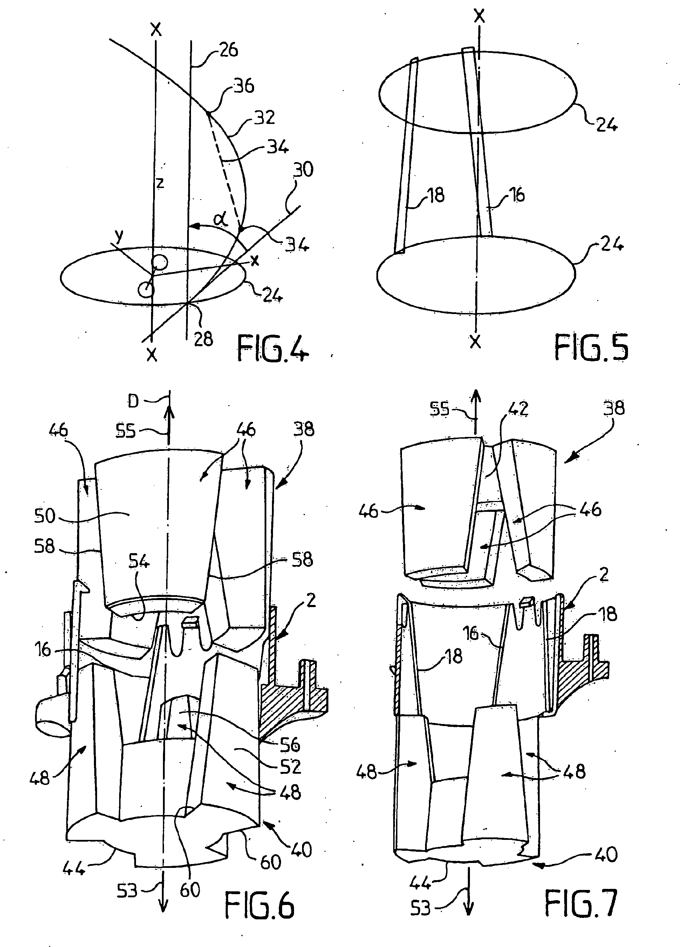

On a représenté sur la figure 4 une vue dans l'espace qui montre l'inclinaison des nervures 16, 18 par rapport à l'axe longitudinal X-X de la paroi périphérique 4. Le cercle 24 schématise le diamètre de la paroi périphérique. L'axe X-X est perpendiculaire au plan du cercle 24 et il passe par le centre de ce cercle. La droite 26 est parallèle à l'axe X-X et elle coupe le cercle 24 en un point 28. La droite 30 est tangente à l'hélice 32 d'axe X-X. Elle fait un angle α avec la droite 26.

Les nervures 16 et 18 peuvent avantageusement présenter une forme hélicoïdale et elles ont chacune une arête destinée à venir en contact avec l'équipement, ici l'enveloppe du moteur électrique. En d'autres termes, chacune des arêtes des nervures 16 et 18 est constituée par un segment d'hélice 32 d'angle d'inclinaison α avec la parallèle 26 à l'axe X-X de la paroi périphérique de la pièce moulée. Evidemment, le sens des hélices est différent. L'hélice représentée sur la figure 4 est une hélice à droite qui correspond aux nervures 16. Les arêtes des nervures 18 suivent le profil d'une hélice identique, ayant de préférence (mais ce n'est pas indispensable) la même inclinaison α mais orientée en sens inverse (hélice à gauche). Deux hélices 16 et 18 de sens opposé sont alors regroupées par paire comme représenté sur la figure 5.

Dans une autre réalisation du procédé de l'invention, les arêtes des nervures 16 et 18 sont constituées par un segment de droite 35 reliant deux points 34 et 36 situés sur l'hélice 32. Cette réalisation est plus simple parce que les nervures sont alors rectilignes. La forme de la base des nervures n'est pas déterminante tant qu'elle ne nuit pas au démoulage de la pièce de support. Ce qui est important ici c'est la forme de l'arête de la nervure, qui peut être plus ou moins pointue.

On a illustré sur les figures 6 et 7 le procédé de moulage de l'invention. Dans ce procédé, on utilise un moule constitué de deux noyaux, à savoir un noyau supérieur 38 et un noyau inférieur 40. Les noyaux 38 et 40 sont représentés partiellement sur les figures 6 et 7. Le noyau supérieur 38 comporte une partie cylindrique 42 et le noyau inférieur 40 comporte une partie cylindrique 44. Des protubérances périphériques 46 sont rattachées à la partie centrale cylindrique 42 du noyau supérieur 38 et des protubérances périphériques 48 sont rattachées à la partie centrale cylindrique 44 du noyau inférieur 40. Dans l'exemple, il y a trois protubérances pour chacun des noyaux, mais ce nombre pourrait être inférieur ou supérieur.

Les protubérances 46 du noyau supérieur 38 comportent une face cylindrique extérieure 50 et une face cylindrique intérieure 54 et des faces radiales 58 qui relient les faces cylindriques extérieure 50 et intérieure 54.

Les protubérances périphériques 48 du noyau inférieur 40 comportent une face cylindrique extérieure 52 et une face cylindrique intérieure 56 et des faces radiales 60 qui relient les faces cylindriques extérieures 52 et cylindriques intérieures 56.

Les faces radiales 58 et 60 sont inclinées par rapport à l'axe X-X de la pièce à mouler d'un angle α égal à l'angle d'inclinaison des nervures. Elles peuvent être planes ou hélicoïdales. Il s'agit plus précisément de la zone de raccordement entre la paroi cylindrique extérieure et la paroi radiale de chaque protubérance, comme on le verra plus loin.

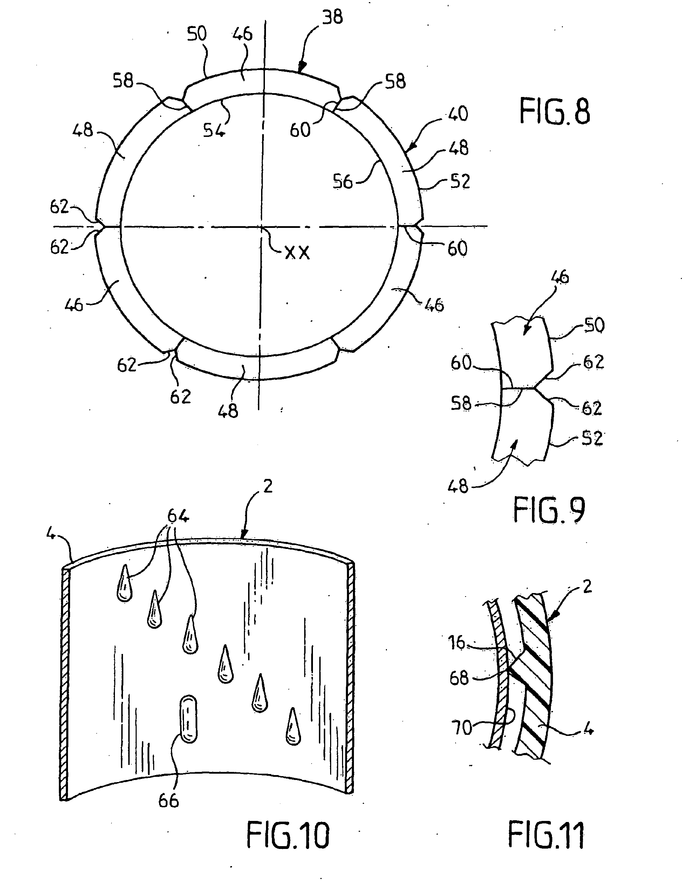

Comme on peut le voir sur la figure 6, et également sur la figure 8 qui représente une vue de dessus des noyaux, les formes des noyaux 38 et 40 sont conçues de manière que ces derniers s'emboîtent l'un dans l'autre. En d'autres termes, les trois protubérances périphériques 46 du noyau supérieur et les trois protubérances périphériques 48 du noyau inférieur s'emboîtent les unes dans les autres de manière parfaite, leurs faces radiales venant en contact l'une avec l'autre de manière à reconstituer un cylindre complet sans jeu entre elles, sauf dans les zones de moulage des nervure. Les angles d'inclinaison des faces étant identiques, ces dernières sont en contact parfait l'une avec l'autre et forment un plan de joint des noyaux, sauf dans les zones de moulage des nervures.

Comme on peut le voir sur la figure 8, et plus particulièrement sur la figure 9, des dégagements 62 sont formés dans les protubérances périphériques 46 et 48. Ces dégagements 62 sont formés chacun par une face de raccordement reliant une face cylindrique extérieure 50 et une face radiale 58 d'une protubérance 46 du noyau supérieur 38 ou par une face de raccordement reliant une face cylindrique extérieure 52 et une face radiale 60 d'une protubérance 48 du noyau inférieur 60. Il est possible en variante de ne prévoir ces dégagements que sur l'un des noyaux. Ces dégagements laissent un vide qui sera rempli par la matière moulée au moment du moulage de manière à constituer les nervures 16 et 18. Bien entendu, la forme des dégagements 62 correspond à la forme des nervures que l'on désire obtenir.

Dans l'exemple représenté, les dégagements 62 délimitent un volume de section triangulaire de telle sorte que, après moulage, les nervures présenteront une forme correspondante, c'est-à-dire une section triangulaire. Si on désire obtenir une autre forme de nervure, par exemple semi-circulaire ou elliptique, etc. La forme des dégagements 62 doit être adaptée à ce profil.

Les nervures 16 et 18 étant disposées selon le plan de joint, on conçoit qu'il n'est pas nécessaire de prévoir un angle de dépouille. Le noyau supérieur 38 et le noyau inférieur 40 se séparent l'un de l'autre en se dégageant des nervures. L'angle d'inclinaison des faces planes radiales 58 et 62, par exemple compris entre 1° et 15°, facilite évidemment le démoulage.

Lorsque les arêtes des nervures présentent une forme hélicoïdale qui suit le profil de l'hélice 32 (figure 4), l'angle de dépouille est totalement nul. Lorsque, au contraire, les faces radiales sont rectilignes, il existe un petit espace entre le profil de l'hélice et le segment de droite 35. Il existe alors une dépouille très faible. Par exemple, pour un rayon de 32,5 mm et un angle α de 7° et une longueur de 50 mm pour les nervures 16 et 18, la variation maximale du cercle défini par l'extrémité des nervures 16 et 18 est inférieure à 0,15 mm sur le rayon de ce cercle.

Toutefois, l'utilisation d'une section circulaire ou carrée génère un angle de dépouille très faible de la surface plane décrite par la section le long de l'hélice. L'angle de dépouille s'applique sur une direction D de rapprochement ou d'écartement des noyaux, ce qui limite l'effet de l'angle de dépouille.

Préalablement au moulage, les noyaux 38 et 40 formant le moule sont rapprochés selon la direction D qui se confond avec l'axe longitudinal X-X de la pièce de support à mouler. Après le moulage, les noyaux sont écartés l'un de l'autre selon la même direction D, comme schématisé par les flèches 53 et 55 (figures 6 et 7).

On a représenté sur la figure 10 une variante de réalisation du procédé et de la pièce obtenue selon le procédé. Dans ce mode de réalisation, la paroi périphérique 4 de la pièce à mouler ne comporte pas de nervures continues, comme dans le mode de réalisation précédent, mais une série de bossages 64 formant une nervure discontinue. Les bossages 64 sont disposés selon le plan de joint entre les noyaux supérieur et inférieur, de manière similaire aux nervures du mode de réalisation précédent. Ils viennent de moulage, par le remplissage de matière plastique moulée, d'évidements (non représentés) formés dans les protubérances périphériques 46 et 48. Il va de soi que la forme de ces évidements (non représentés) correspond à la forme des bossages 64 que l'on désire obtenir.

De la même manière que pour les nervures, les bossages 64 peuvent présenter une grande diversité de profils, du moment qu'ils procurent des points de contact susceptibles de former les arêtes des nervures. Ces bossages peuvent avoir une section triangulaire, carrée, rectangulaire, elliptique, semi-circulaire ou une combinaison de ces formes. Leur section rectangulaire possède de préférence une longueur de 10 mm et une largeur de 5 mm.

Les bossages 64 peuvent être disposés exactement selon le profil de l'hélice 32 (figure 4) ou bien ils peuvent être disposés selon un segment de droite rectiligne 35 rejoignant deux points de l'hélice. Toutefois, la disposition des bossages doit être conçue de manière à rendre le moulage possible, ce qui exclut la superposition de zones de démoulage. La longueur des bossages est de préférence inférieure à 10 mm. Cette longueur permet de conserver une faible variation du rayon du cercle défini par leurs extrémités.

Dans l'exemple représenté, les bossages 64 présentent la forme de gouttes d'eau, ce qui est avantageux pour le démoulage. On a également représenté sur la figure 10 une variante d'un bossage 66 présentant une section semi-circulaire et deux extrémités arrondies. Toutes ces formes permettent d'assurer un serrage continu et constant du moteur électrique tout en engendrant une faible variation de diamètre du cercle défini par l'extrémité des bossages.

La figure 11 montre une nervure 16 de section triangulaire ayant une arête 68 et une base opposée qui se rattache à la paroi cylindrique 4 de la pièce support 2. l'arête 68 vient au contact d'un équipement 70, ici l'enveloppe d'un moteur électrique.

## Revendications

1. Pièce de support pour le maintien d'un équipement, notamment d'un équipement de véhicule automobile, comprenant un boîtier en matière plastique moulée (2) ayant une paroi périphérique (4) sur laquelle des nervures de support (16, 18) sont prévues pour le maintien de l'équipement, la paroi périphérique (4) définissant un logement d'axe donné (X-X) pour la réception de l'équipement, **caractérisée en ce que** les nervures (16, 18) sont inclinées par rapport à l'axe (X-X) du logement de réception.

2. Pièce de support selon la revendication 1, **caractérisée en ce que** les nervures (16, 18) sont formées à l'intérieur du boîtier.

3. Pièce de support selon l'une des revendications 1 et 2, **caractérisée en ce que** les nervures (16, 18) ont chacune une arête (68) propre à former contact avec l'équipement.

4. Pièce de support selon l'une des revendications 1 à 3, **caractérisée en ce que** les nervures (16, 18) sont groupées par paires comportant des inclinaisons opposées.

5. Pièce de support selon l'une des revendications 1 à 4, **caractérisée en ce que** le nombre des nervures (16, 18) est compris entre 4 et 12.

6. Pièce de support selon l'une des revendications 1 à 5, **caractérisée en ce que** les nervures (16, 18) présentent une forme en hélice (32).

7. Pièce de support selon l'une des revendications 1 à 5, **caractérisée en ce que** les nervures (16, 18) présentent la forme_d'un segment de droite (35) reliant deux points (34, 36) situés sur une hélice (32).

8. Pièce de support selon l'une des revendications 6 et 7, **caractérisée en ce que** la forme de la nervure (16, 18) correspond à la forme d'une arête (68) que présente la nervure.

9. Pièce de support selon l'une des revendications 6 et 7, **caractérisée en ce que** l'angle d'inclinaison de l'hélice (32) est compris entre 1° et 15°.

10. Pièce de support selon l'une des revendications 1 à 9, **caractérisée en ce que** les nervures (16, 18) présentent une section choisie dans le groupe comprenant les formes triangulaires, carrées, rectangulaires, semi-circulaires, elliptiques ou une combinaison de ces formes.

11. Pièce de support selon l'une des revendications 1 à 10, **caractérisée en ce que** la section des nervures est constante, croissante ou décroissante, ou présente une combinaison de ces formes.

12. Pièce de support selon l'une des revendications 1 à 11, **caractérisée en ce que** les nervures (16, 18) sont continues.

13. Pièce de support selon l'une des revendications 1 à 11, **caractérisée en ce que** les nervures sont formées par une série de bossages (64, 66) disposés selon une ligne inclinée (32) par rapport à l'axe (X-X) du logement.

14. Pièce de support selon la revendication 13, **caractérisée en ce que** les bossages (64, 66) sont disposés selon une ligne hélicoïdale (32).

15. Pièce de support selon la revendication 13, **caractérisée en ce que** les bossages (64, 66) sont disposés selon un segment de droite (35) reliant deux points (34, 35) situés sur une hélice (32).

16. Pièce de support selon l'une des revendications 14 et 15, **caractérisée en ce que** les bossages (64, 66) ont des points de contact définissant des arêtes (68) des nervures.

17. Procédé de moulage d'une pièce de support (2) comportant des nervures de support (16, 18) pour le maintien d'un équipement, notamment un équipement de véhicule automobile, comportant les étapes consistant à :
- prévoir un moule constitué d'au moins deux noyaux (38, 40) ;
- rapprocher les deux noyaux (38, 40) selon une direction donnée (D) de telle sorte que ces derniers soient en contact l'un avec l'autre une fois mis en place selon un plan de joint ;
- remplir le moule d'une matière moulable ;
- écarter les noyaux (38, 40) selon la direction donnée (D), **caractérisé en ce que** les nervures de support (16, 18) sont prévues sur la pièce moulée avec une inclinaison (α) par rapport à la direction donnée (D) ; **en ce que** les noyaux (38, 40) sont conformés de telle manière que leur plan de joint suive les nervures (16, 18), et **en ce qu'**un dégagement (62) est prévu dans au moins un des noyaux (38, 40) au niveau de leur plan de joint afin de former les nervures, lors du moulage, par un remplissage de ce dégagement (62) par la matière moulée.

18. Procédé selon la revendication 17, **caractérisé en ce que** les noyaux (38, 40) sont conformés de telle manière que leur plan de joint forme des arêtes (68) des nervures (16, 18).

19. Moule pour la mise en oeuvre du procédé selon l'une des revendications 17 et 18, **caractérisé en ce qu'**il comprend un noyau supérieur (38) comportant une partie centrale cylindrique (42) et des protubérances périphériques (46) et un noyau inférieur (40) comportant une partie centrale cylindrique (44) et des protubérances périphériques (48).

20. Moule selon la revendication 19, **caractérisé en ce que** chaque protubérance périphérique (46) du noyau supérieur (38) comporte une face cylindrique extérieure (50), une face cylindrique intérieure (54) et des faces radiales (58) reliant la face cylindrique extérieure (50) et la face cylindrique extérieure (54), et **en ce que** chaque protubérance périphérique (48) du noyau inférieur (40) comporte une face cylindrique extérieure (52), une face cylindrique intérieure (56) et des faces radiales (60) reliant la face cylindrique extérieure (52) et la face cylindrique intérieure (56).

21. Moule selon l'une des revendications 19 et 20, **caractérisé en ce que** les faces radiales (58, 60) sont planes ou hélicoïdales.

22. Moule selon l'une des revendications 19 à 21, **caractérisé en ce qu'**il comprend un dégagement (62) dans au moins un des noyaux (38, 40) au niveau de leur plan de joint pour former les nervures (16, 18) lors du moulage.

23. Moule selon l'une des revendication 20 à 22, **caractérisé en ce que** le dégagement (62) est formé par une face de raccordement reliant une face cylindrique extérieure (50) et une face radiale (58) du noyau supérieur (38) et/ou par une face de raccordement reliant une face cylindrique extérieure (52) et une face radiale (60) du noyau inférieur (40).

## Claims

1. Support piece for holding an item of equipment, in particular motor vehicle equipment, comprising a casing made from moulded plastics material (2) having a peripheral wall (4) on which support ribs (16, 18) are provided for holding the equipment, the peripheral wall (4) defining a housing of given axis (X-X) for receiving the equipment, **characterised in that** the ribs (16, 18) are inclined with respect to the axis (X-X) of the reception housing.

2. Support piece according to claim 1, **characterised in that** the ribs (16, 18) are formed inside the casing.

3. Support piece according to one of claims 1 and 2, **characterised in that** the ribs (16, 18) each have a ridge (68) able to form a contact with the equipment.

4. Support piece according to one of claims 1 to 3, **characterised in that** the ribs (16, 18) are grouped together in pairs having opposite inclinations.

5. Support piece according to one of claims 1 to 4, **characterised in that** the number of ribs (16, 18) is between 4 and 12.

6. Support piece according to one of claims 1 to 5, **characterised in that** the ribs (16, 18) have a helix shape (32).

7. Support piece according to one of claims 1 to 5, **characterised in that** the ribs (16, 18) are in the form of a straight-line segment (35) connecting two points (34, 36) situated on a helix (32).

8. Support piece according to one of claims 6 and 7, **characterised in that** the shape of the rib (16, 18) corresponds to the shape of a ridge (68) that the rib has.

9. Support piece according to one of claims 6 and 7, **characterised in that** the angle of inclination of the helix (32) is between 1° and 15°.

10. Support piece according to one of claims res1 to 9, **characterised in that** the ribs (16, 18) have a cross section chosen from the group comprising the triangular, square, rectangular, semicircular and elliptical shapes or a combination of such shapes.

11. Support piece according to one of claims 1 to 10, **characterised in that** the cross section of the ribs is constant, increasing or decreasing, or has a combination of these forms.

12. Support piece according to one of claims 1 to 11, **characterised in that** the ribs (16, 18) are continuous.

13. Support piece according to one of claims 1 to 11, **characterised in that** the ribs are formed by a series of protrusions (64, 66) disposed along a line (32) inclined with respect to the axis (X-X) of the housing.

14. Support piece according to claim 13, **characterised in that** the protrusions (64, 66) are disposed on a helical line (32).

15. Support piece according to claim 13, **characterised in that** the protrusions (64, 66) are disposed along a straight-line segment (35) connecting two points (34, 35) situated on a helix (32).

16. Support piece according to one of claims 14 and 15, **characterised in that** the protrusions (64, 66) have contact points defining ridges (68) on the ribs.

17. Method of moulding a support piece (2) comprising support ribs (16, 18) for holding an item of equipment, in particular motor vehicle equipment, comprising the steps consisting of:
- providing a mould consisting of at least two cores (38, 40);
- bringing together the two cores (38, 40) in a given direction (D) so that they are in contact with each other once they are put in place in a joint face;
- filling the mould with a mouldable material;
- separating the cores (38, 40) in the given direction (D), **characterised in that** the support ribs (16, 18) are provided on the moulded piece with an inclination (α) with respect to the given direction (D);
**in that** the cores (38, 40) are conformed so that the joint face thereof follows the ribs (16, 18), and
**in that** a recess (62) is provided in at least one of the cores (38, 40) at the joint face thereof in order to form the ribs, during moulding, by a filling of this recess (62) by the moulded material.

18. Method according to claim 17, **characterised in that** the cores (38, 40) are conformed so that the joint face thereof forms ridges (68) on the ribs (16, 18).

19. Mould for implementing the method according to one of claims 17 and 18, **characterised in that** it comprises a top core (38) comprising a cylindrical central part (42) and peripheral protuberances (46) and a bottom core (40) comprising a cylindrical central part (44) and peripheral protuberances (48).

20. Mould according to claim 19, **characterised in that** each peripheral protuberance (46) on the top core (38) has an external cylindrical face (50), an internal cylindrical face (54) and radial faces (58) connecting the external cylindrical face (50) and the external cylindrical face (54), and **in that** each peripheral protuberance (48) on the bottom core (40) has an external cylindrical face (52), an internal cylindrical face (56) and radial faces (60) connecting the external cylindrical face (52) and the internal cylindrical face (56).

21. Mould according to one of claims 19 and 20, **characterised in that** the radial faces (58, 60) are flat or helical.

22. Mould according to one of claims 19 to 21, **characterised in that** it comprises a recess (62) in at least one of cores (38, 40) at the joint face thereof in order to form the ribs (16, 18) during moulding.

23. Mould according to one of claims 20 to 22, **characterised in that** the recess (62) is formed by a connecting face connecting an external cylindrical face (50) and a radial face (58) of the top core (38) and/or by a connecting face connecting an external cylindrical face (52) and a radial face (60) of the bottom core (40).

## Patentansprüche

1. Trägerteil zum Halten eines Ausrüstungsteiles, im Speziellen eines Ausrüstungsteiles für ein Kraftfahrzeug, umfassend ein Gehäuse aus Kunststoffpressstoff (2) mit einer peripheren Wand (4), auf der Trägerrippen (16, 18) zum Halten des Ausrüstungsteiles vorgesehen sind, wobei die periphere Wand (4) eine gegebene Achsaufnahme (X-X) zum Einsetzen des Ausrüstungsteiles definiert, **dadurch gekennzeichnet, dass** die Rippen (16, 18) im Verhältnis zur Achse (X-X) der Aufnahme geneigt sind.

2. Trägerteil nach Anspruch 1, **dadurch gekennzeichnet, dass** die Rippen (16, 18) im Inneren des Gehäuses ausgeformt sind.

3. Trägerteil nach einem der Ansprüche 1 und 2, **dadurch gekennzeichnet, dass** die Rippen (16, 18) jeweils einen Grat (68) aufweisen, der dazu vorgesehen ist, das Ausrüstungsteil zu berühren.

4. Trägerteil nach einem der Ansprüche 1 bis 3, **dadurch gekennzeichnet, dass** die Rippen (16, 18) paarweise zusammengefasst sind, und jeweils entgegengesetzte Neigungen aufweisen.

5. Trägerteil nach einem der Ansprüche 1 bis 4, **dadurch gekennzeichnet, dass** die Anzahl der Rippen (16, 18) zwischen 4 und 12 liegt.

6. Trägerteil nach einem der Ansprüche 1 bis 5, **dadurch gekennzeichnet, dass** die Rippen (16, 18) eine Schraubenlinienform (32) aufweisen.

7. Trägerteil nach einem der Ansprüche 1 bis 5, **dadurch gekennzeichnet, dass** die Rippen (16, 18) die Form eines rechten (35) Segments aufweisen, das zwei Punkte (34, 36) miteinander verbindet, die auf einer Schraubenlinie (32) liegen.

8. Trägerteil nach einem der Ansprüche 6 und 7, **dadurch gekennzeichnet, dass** die Form der Rippe (16, 18) der Form eines Grates (68) entspricht, der auf der Rippe angeordnet ist.

9. Trägerteil nach einem der Ansprüche 6 und 7, **dadurch gekennzeichnet, dass** der Neigungswinkel der Schraubenlinie (32) zwischen 1° und 15° liegt.

10. Trägerteil nach einem der Ansprüche 1 bis 9, **dadurch gekennzeichnet, dass** die Rippen (16, 18) einen Querschnitt aufweisen, der aus einer Gruppe mit dreieckigen, viereckigen, rechteckigen, halbrunden, elliptischen Formen, oder einer Kombination dieser Formen ausgewählt wird.

11. Trägerteil nach einem der Ansprüche 1 bis 10, **dadurch gekennzeichnet, dass** der Querschnitt der Rippen konstant, zunehmend oder abnehmend ist, oder eine Kombination dieser Formen darstellt.

12. Trägerteil nach einem der Ansprüche 1 bis 11, **dadurch gekennzeichnet, dass** die Rippen (16, 18) durchgehend sind.

13. Trägerteil nach einem der Ansprüche 1 bis 11, **dadurch gekennzeichnet, dass** die Rippen durch eine Reihe von Buckeln (64, 66) gebildet werden, die entlang einer im Verhältnis zur Achse (X-X) der Aufnahme schrägen Linie (32) angeordnet sind.

14. Trägerteil nach Anspruch 13, **dadurch gekennzeichnet, dass** die Buckeln (64, 66) entlang einer Schraubenlinie (32) angeordnet sind.

15. Trägerteil nach Anspruch 13, **dadurch gekennzeichnet, dass** die Buckeln (64, 66) entlang einem rechten Segment (35) angeordnet sind, das zwei Punkte (34, 36) miteinander verbindet, die auf einer Schraubenlinie (32) liegen.

16. Trägerteil nach einem der Ansprüche 14 und 15, **dadurch gekennzeichnet, dass** die Buckeln (64, 66) Berührungsstellen aufweisen, die Grate (68) der Rippen definieren.

17. Verfahren zum Formgießen eines Trägerteils (2) umfassend Trägerrippen (16, 18) zum Halten eines Ausrüstungsteiles, im Speziellen eines Ausrüstungsteiles für ein Kraftfahrzeug, umfassend die folgenden Schritte:
- die Vorbereitung einer Form bestehend zumindest aus zwei Kernen (38, 40);
- die Annäherung der beiden Kerne (38, 40) entsprechend einer vorgegebenen Richtung (D), sodass letztere einander berühren, sobald sie entlang einer Stoßfläche angeordnet sind;
- das Befüllen der Form mit einem formbaren Material;
- das Abspreizen der Kerne (38, 40) entsprechend einer vorgegebenen Richtung (D),
**dadurch gekennzeichnet, dass** die Trägerrippen (16, 18) auf dem Formteil mit einer Neigung (α) in Bezug auf die vorgegebene Richtung (D) vorgesehen sind;
**dadurch**, dass die Kerne (38, 40) so zusammengeformt sind, dass ihre Stoßfläche den Rippen (16, 18) folgt, und **dadurch**, dass ein Freiraum (62) in zumindest einem der Kerne (38, 40) im Bereich ihrer Stoßfläche vorgesehen ist, um beim Gießen durch das Ausfüllen dieses Freiraumes (62) durch das Gießmaterial Rippen zu bilden.

18. Verfahren nach Anspruch 17, **dadurch gekennzeichnet, dass** die Kerne (38, 40) so zusammengeformt sind, dass ihre Stoßfläche Grate (68) an den Rippen (16, 18) bildet.

19. Form zur Anwendung des Verfahrens nach einem der Ansprüche 17 und 18, **dadurch gekennzeichnet, dass** sie einen oberen Kern (38) mit einem mittleren zylindrischen Abschnitt (42) und periphere Protuberanzen (46) und einen unteren Kern (40) mit einem mittleren zylindrischen Abschnitt (44) und periphere Protuberanzen (48) umfasst.

20. Form nach Anspruch 19, **dadurch gekennzeichnet, dass** jede periphere Protuberanz (46) des oberen Kerns (38) eine zylindrische Außenfläche (50), eine zylindrische Innenfläche (54) und radiale Flächen (58) umfasst, die die zylindrische Außenfläche (50) und die zylindrische Innenfläche (54) miteinander verbindet, und **dadurch**, dass jede periphere Protuberanz (48) des unteren Kerns (40) eine zylindrische Außenfläche (52), eine zylindrische Innenfläche (56) und radiale Flächen (60) umfasst, die die zylindrische Außenfläche (52) und die zylindrische Innenfläche (56) miteinander verbindet.

21. Form nach einem der Ansprüche 19 und 20, **dadurch gekennzeichnet, dass** die radialen Flächen (58, 60) eben oder schraubenförmig sind.

22. Form nach einem der Ansprüche 19 bis 21, **dadurch gekennzeichnet, dass** sie einen Freiraum (62) in zumindest einem der Kerne (38, 40) im Bereich ihrer Stoßfläche umfasst, um beim Gießen die Rippen (16, 18) zu bilden.

23. Form nach einem der Ansprüche 20 bis 22, **dadurch gekennzeichnet, dass** der Freiraum (62) durch eine Verbindungsfläche gebildet wird, die eine zylindrische Außenfläche (50) und eine radiale Fläche (58) eines oberen Kerns (38) verbindet und/ oder durch eine Verbindungsfläche, die eine zylindrische Außenfläche (52) und eine radiale Fläche (60) eines unteren Kerns (40) verbindet.
